# EUROPEAN PATENT SPECIFICATION

(11) **EP 1 828 908 B1**
(45) Date of publication and mention of the grant of the patent: **09.03.2011**
(21) Application number: 05801420.0
(22) Date of filing: 19.10.2005
(51) Int. Cl.: G06F 12/08, G06F 12/12

(54) **SYSTEM AND METHOD FOR CACHING AND FETCHING DATA.**
SYSTEM UND VERFAHREN ZUM CACHE-SPEICHERN UND ABRUFEN VON DATEN
SYSTEME ET PROCEDE DE RECHERCHE ET DE MISE EN ANTEMEMOIRE DE DONNEES

(30) Priority: 26.11.2004 US 996359
(43) Date of publication of application: 05.09.2007
(73) Proprietor: AGFA INC., Etobicoke, Ontario M9W 1G6 (CA)
(72) Inventor: HUNT, Neil, Waterloo, Ontario N2T 2C8 (CA); KRAWCHUK, Curtis, Waterloo, Ontario N2K 4E9 (CA); WALLACE, William, Waterloo, Ontario N2L 5Y1 (CA)
(74) Representative: Verbrugghe, Anne Marie L.
(86) International application number: PCT/EP2005/055354
(87) International publication number: WO 2006/056516

(56) References cited:
- US-A1- 2004 167 806

## Description

### FIELD OF THE INVENTION

The present invention relates generally to data processing systems, and more particularly to a system and method for caching and fetching data.

### BACKGROUND OF THE INVENTION

Ref: US 2004/167806 A1 (Eichhorn Ole et al) 26 august 2004

This document mentions a.o. the use of a predicitive function to determine the likelihood of an adjacent or other block being requested. If said likelihood exceeds a certain treshold, prefetching may be initiated. The predictive function is not specified.

In data processing systems, in order to make efficient use of available data processing resources, it is often necessary to provide a data buffer between higher bandwidth and lower bandwidth components. For example, a cache is often used as a data buffer between a processor and large capacity storage (e.g. a disk drive) to temporarily store data that must be accessed very quickly for processing.
However, due to cost and design constraints, cache is often limited in size. If there is insufficient space available in cache, data must be dropped from cache, and new data must be fetched into cache in order to maintain a sufficient data buffer. If a poor data caching and fetching strategy is implemented, the resulting high input/output (I/O) generated by constantly dropping and fetching data may result in poor system performance. The problem may be worsened when the size of data that must be constantly dropped and fetched is large, or when the desired rate at which the data must be processed is high.

By way of example, in digital medical imaging applications (ultrasound, radiology, cardiology, etc.), high-resolution images are often necessary to facilitate proper diagnosis of a medical condition. In digital ultrasound, for example, many frames of high-resolution digital images are processed in rapid succession to produce a moving image. For just 30 seconds of ultrasound, comprising 900 high-resolution frames rendered at 30 frames per second, approximately 1.2 Gbytes of storage may be required. If the available space in cache is insufficient to store all of the required frames, then it becomes necessary to implement a drop and fetch strategy to store in cache only a portion of the frames at any one time.
As another example, approximately 7.3 Gbytes of storage may be required to store 14,500 frames (approximately 0.5 Mbytes each) of three-dimensional computed tomography (also known as CT or CAT). While CT's are typically not played in full as a moving image, moving back and forth between two points in the three-dimensional image may again make it necessary to render many high-resolution frames in succession at a high rate. This requires significantly more processing power and memory capacity than typical consumer video applications such as DVD playback or playback of compressed streaming video.
While the cost of cache memory has fallen over time, the storage capacity required to store hundreds or even thousands of large data frames may make it impractical or quite impossible to store everything in cache. Thus, a more efficient method and system for caching and fetching data is desirable.

### SUMMARY OF THE INVENTION

The present invention relates to a system and method for fetching a plurality of data frames for processing in succession at a desired rate. Data frames are fetched into available space in cache. A priority level is then assigned to each data frame by applying a recurring priority level pattern. A suitable priority level cut-off may be selected based on at least one of the desired rate of processing, the size of the data frames, and the available space in cache. Any data frames with a priority level below the priority level cut-off are dropped. Successive data frames having assigned priority levels above the priority level cut-off are selectively fetched into cache.
In an aspect of the invention, there is provided a data processing system implemented method of fetching a plurality of data frames for processing in succession at a desired rate, comprising: fetching the plurality of data frames into available space in cache; assigning a priority level to each of the plurality of data frames by applying a recurring priority level pattern; selecting a priority level cut-off for the plurality of data frames.
In an embodiment, the data processing system implemented method further comprises dropping from the cache any data frames with a priority level below the priority level cut-off.
In another embodiment, the data processing system implemented method further comprises selectively fetching into the cache any successive data frames with a priority level above the priority level cut-off. In another embodiment, the data processing system implemented method further comprises selecting the priority level cut-off in dependence upon at least one of the desired rate, the size of the plurality of data frames, and the available space in the cache.
In another embodiment, the data processing system implemented method further comprises applying different priority levels to adjacent data frames utilizing the recurring priority level pattern.
In another embodiment, the data processing system implemented method further comprises applying a different priority level to each data frame within a recurring cycle utilizing the recurring priority level pattern.
In another embodiment, the data processing system implemented method further comprises applying an alternating saw-tooth arrangement utilizing the recurring priority level pattern.
In another embodiment, the data processing system implemented method further comprises setting the length of the recurring priority level pattern to be at least two data frames in length.
In another embodiment, the plurality of data frames comprise digital image frames, and the processing comprises rendering the image frames for display in succession at the desired rate.
In another aspect of the invention, there is provided a data processing system for fetching a plurality of data frames for processing in succession at a desired rate, comprising: a cache for fetching into available space the plurality of data frames; an assignment module for assigning a priority level to each of the plurality of data frames by applying a recurring priority level pattern; a selection module for selecting a priority level cut-off for the plurality of data frames.
In an embodiment, the data processing system further comprises a drop module for dropping from the cache any data frames with a priority level below the priority level cut-off.
In another embodiment, the data processing system further comprises a fetch module for selectively fetching into the cache any successive data frames with a priority level above the priority level cut-off.
In another embodiment, the selection module is configurable to select the priority level cut-off in dependence upon at least one of the desired rate, the size of the plurality of data frames, and the available space in the cache.
In another embodiment, the recurring priority level pattern applies different priority levels to adjacent data frames.
In another embodiment, the recurring priority level pattern applies a different priority level to each data frame within a recurring cycle.
In another embodiment, the recurring priority level pattern is at least two data frames in length.
In another embodiment, the plurality of data frames comprise digital image frames, and the processing comprises rendering the image frames for display in succession at the desired rate.
In another aspect of the invention, there is provided a program product operable on a data processing system, the program product comprising: a data processing system usable medium; wherein the data processing system usable medium includes instructions for fetching a plurality of data frames for processing in succession at a desired rate, comprising: instructions for fetching the plurality of data frames into available space in cache; instructions for assigning a priority level to each of the plurality of data frames by applying a recurring priority level pattern; instructions for selecting a priority level cut-off for the plurality of data frames.
In an embodiment, the instructions for fetching a plurality of data frames for processing in succession at a desired rate, further comprises instructions for dropping from the cache any data frames with a priority level below the priority level cut-off.
In another embodiment, the instructions for fetching a plurality of data frames for processing in succession at a desired rate, further comprises instructions for selectively fetching into the cache any successive data frames with a priority level above the priority level cut-off.
In another embodiment, the instructions for fetching a plurality of data frames for processing in succession at a desired rate, further comprises instructions for selecting the priority level cut-off in dependence upon at least one of the desired rate, the size of the plurality of data frames, and the available space in the cache. These and other aspects of the invention will become apparent from the following more particular descriptions of exemplary embodiments.

Further advantages and embodiments of the present invention will become apparent from the following description and drawings.

### BRIEF DESCRIPTION OF THE DRAWINGS

FIG. 1 shows a schematic block diagram of a data processing system which may provide an operating environment for practicing exemplary embodiments of the invention;
FIG. 2 shows a schematic block diagram of an exemplary architecture suitable for practicing exemplary embodiments of the invention;
FIGS. 3A to 3F show a series of x-y graphs illustrating a recurring priority level pattern, and selection of a suitable cut-off, in accordance with an embodiment of the invention;
FIG. 4 shows a schematic flow chart of a method in accordance with an embodiment of the invention, corresponding to the illustrative example shown in FIGS. 3A to 3F.

### DETAILED DESCRIPTION OF THE INVENTION

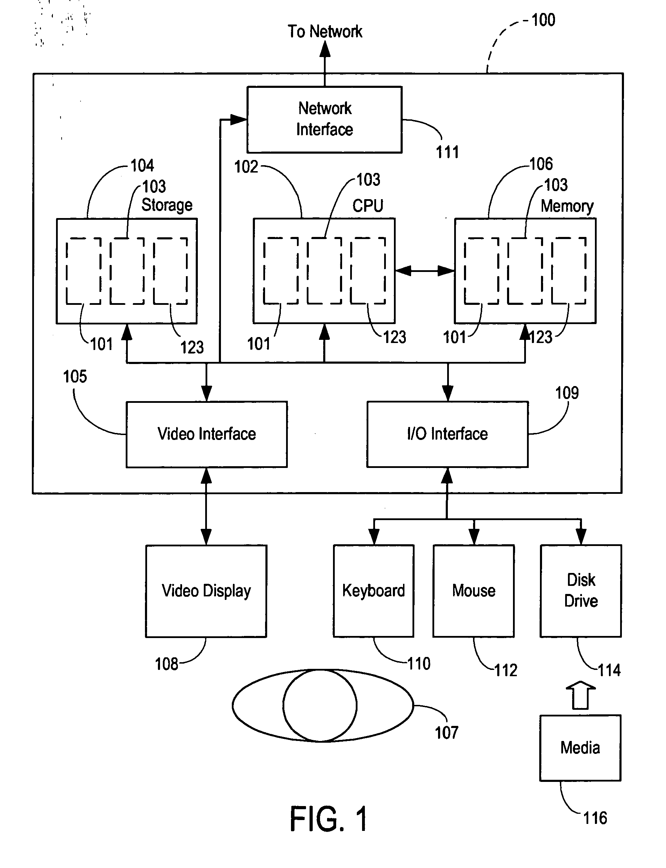

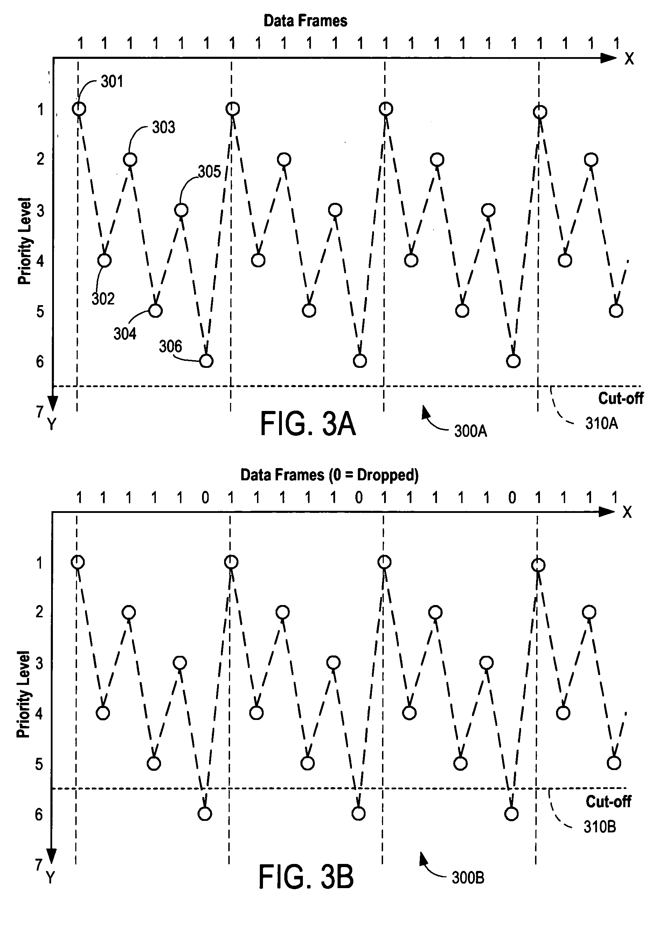

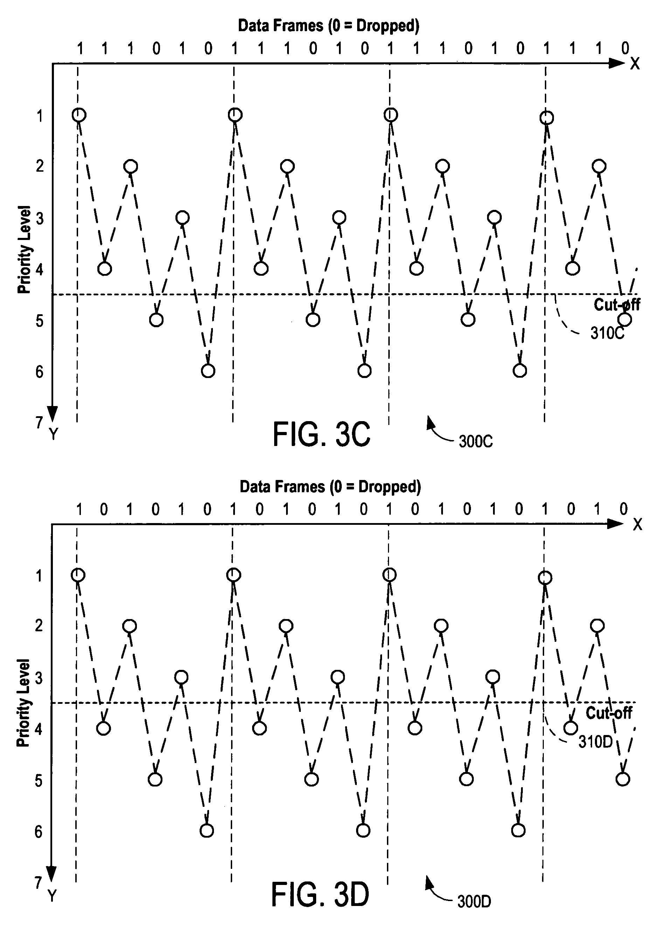

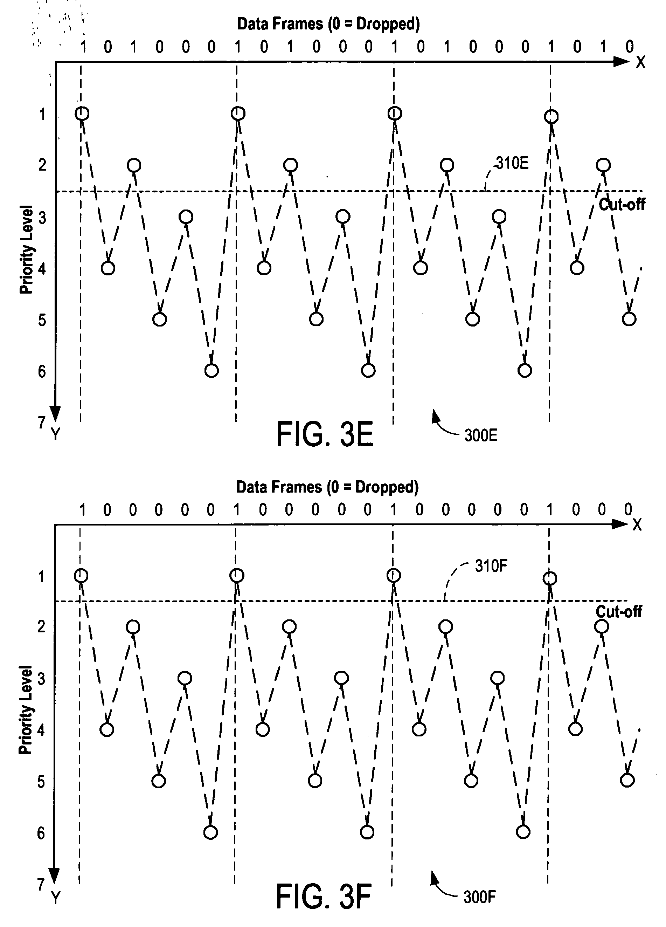

FIG. 1 shows a schematic block diagram of a data processing system which may provide an operating environment for practicing exemplary embodiments of the invention. The data processing system 100 may include a central processing unit ("CPU") 102 connected to a storage unlit 104 and to a random access memory 106. The CPU 102 may process an operating system 101, application software 103, and data 123. The operating system 101, application software 103, and data 123 may be stored in storage unit 104 and loaded into memory 106, as required. A user 107 may interact with the data processing system 100 using a video display 108 connected by a video interface 105, and various input/output devices such as a keyboard 110, mouse 112, and disk drive 114 connected by an I/O interface 109. In known manner, the mouse 112 may be configured to control movement of a cursor in the video display 108, and to operate various graphical user interface ("GUI") controls appearing in the video display 108 with a mouse button. The disk drive 114 may be configured to accept data processing system usable media 116. The data processing system 100 may be network enabled via a network interface 111, allowing the data processing system 100 to communicate with other compatible data processing systems across a network (not shown).
It will be appreciated that the data processing system 100 illustrated in FIG. 1 is merely illustrative, and is not meant to be limiting in terms of the type of system that may provide a suitable operating environment for practicing various embodiments of the present invention.

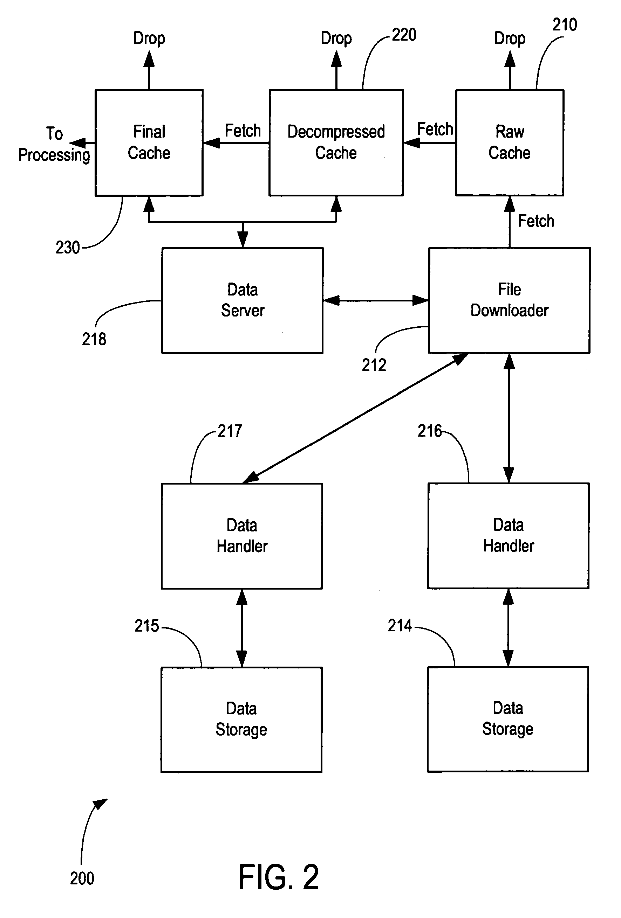

FIG. 2 shows a schematic block diagram of an exemplary architecture 200 suitable for practicing exemplary embodiments of the invention. In this illustrative example, there are three levels of cache. By way of example, these three levels of cache may be embodied in memory 106 of FIG. 1. Alternatively, these three levels of cache may be embodied in separate memory operatively connected to CPU 102 of FIG. 1.
Although three levels of cache are illustrated in FIG. 2, this is not meant to limit the scope of the claimed invention in any way. The invention may be practiced with any suitable cache architecture. For example, the cache architecture may comprise a single level of cache with data fetched from large capacity storage. Alternatively, a multi-level cache architecture may be used where data may be fetched into cache more quickly from other levels of cache. Each of the three levels of cache in this illustrative example is now described in more detail.
First, a "raw" cache 210 may store raw data downloaded by file downloader module 212 from data storage 214, 215. Data storage 214, 215 may be handled by data handler modules 216, 217, respectively. Data storage 214, 215 may be embodied in storage 104 of FIG. 1. Alternatively, data storage 214, 215 may be connected on a network accessible via network adapter 111. The data obtained from data storage 214, 215 and stored in raw cache 210 may be typically in a compressed form (e.g. compressed image frames using the Joint Photographic Experts Group or "JPEG" standard). Raw cache 210 may have a relatively high capacity to store raw, compressed data. Second, a "decompressed" cache 220, configured with a suitable background calculator thread, may store decompressed data (e.g. decompressed image frames) received from raw cache 210. As data in decompressed cache 220 is not compressed, the decompressed cache 220 may not hold as much data as raw cache 210. However, access to the decompressed data in decompressed cache 220 will be relatively fast. Third, a "final" cache 230 may store the actual data (e.g. image frames) required for processing (e.g. by CPU 102). The final cache 230 may also store data that may be altered in some way (e.g. image frame scaling, sharpening, etc.).
A data server module 218 may be used to control fetching of data from raw cache 210, into decompressed cache 220, and then to final cache 230. In this example, the final cache 230 holds the data that will be finally processed (e.g. rendered for display in video display 108 of FIG. 1). Data server module 218 may be embodied, for example, as application software 103 in data processing system 100 of FIG. 1.
Raw cache 210 and the decompressed cache 220 may be used to feed data to the final cache 230 when a cache miss occurs in the final cache 230. When there is a miss on all the caches 210, 220, 230, data may be obtained from data storage 214, 215, for example.
Raw cache 210 and decompressed cache 220 may also have a fetching scheme, although they may be different from that of the present invention. For example, they could rely on a simple first-in-first-out (FIFO) scheme to determine which data frames to cache. Accessing a data frame from one of the raw cache 210 and the decompressed cache 220 may reset the data frame position to be most recent (and therefore removed later).
By using a forward looking, selective fetching scheme in the final cache 230, it is expected that cache misses in the final cache 230 may be fulfilled in most cases by fetching data from one of the other two caches 210, 220.
An illustrative example of a system for caching and fetching data will now be described in detail.
In an embodiment, the system for caching and fetching data may comprise a number of modules, embodied for example in data processing system 100 generally and in application software 103. More specifically, the system for caching and fetching data may include an assignment module for assigning a priority level to each of a plurality of data frames by applying a recurring priority level pattern. By way of example, FIGS. 3A to 3F show a series of x-y graphs illustrating a possible recurring priority level pattern.
The system may further include a selection module for selecting a priority level cut-off for the plurality of data frames. Selection of a suitable cut-off utilizing such a selection module is also illustrated in FIGS. 3A to 3F.
As shown in FIG. 3A, a successive series of data frames are represented as a series of 1's along the x-axis of x-y graph 300A. Priority levels from 1 to 7 are indicated along the inverted y-axis of x-y graph 300A. As shown in x-y graph 300A, a plurality of dots 301 to 306 indicate various priority levels assigned to each data frame along the x-axis. (It will be appreciated that the dashed lines connecting the dots are shown merely to emphasize the recurring pattern.) For example, starting from the leftmost data frame on the x-axis, and reading to the right, a recurring priority level pattern assigns to the first six data frames the following priority levels: 1, 4, 2, 5, 3 and 6, respectively. As will be seen, the recurring priority level pattern 1, 4, 2, 5, 3 and 6 repeats itself, beginning at the 7^{th} data frame, and again at the 13^{th} and the 19^{th} data frames. (Note, however, that this recurring priority level pattern is not meant to be limiting, and that other suitable recurring priority level patterns may be used.)
As will now be explained, by applying a suitable cut-off level against the recurring priority level pattern, a deterministic scheme for dropping data frames and selectively fetching other data frames into cache is created.
Still referring to FIG. 3A, in the x-y graph 300A, a horizontal stippled line 310A labelled "cut-off" is shown below priority level 6. In this case, all of the data frames have an assigned priority level above the cut-off. Thus, FIG. 3A may represent a situation where there is sufficient space available in cache to store all necessary data frames (i.e. no data frames need to be dropped).
Now referring to FIG. 3B, x-y graph 300B has the same recurring priority level pattern as shown in x-y graph 300A of FIG. 3A. However, the cut-off 310B is now set above priority level 6 and below priority level 5. As will be seen, three of the data frames shown in x-y graph 300B have an assigned priority level of 6, which falls below the cut-off. Consequently, in this case, the three data frames are dropped from cache, as indicated in this illustrative example by the use of "0" in place of "1" along the x-axis of x-y graph 300B. For this purpose, a suitably configured drop module (e.g. as embodied in data processing system 100 and application software 103) may be provided to test whether each assigned priority level is below the selected cut-off.
Now referring to FIG. 3C, x-y graph 300C has the same recurring priority level pattern as shown in x-y graph 300A of FIG. 3A, and as shown in x-y graph 300B of FIG. 3B. However, the cut-off 310C is now set above priority level 5, and below priority level 4. Now, it will be seen that seven of the data frames shown have an assigned priority level of 5 or 6, which fall below the cut-off. Consequently, in this case, seven data frames are dropped from cache, as again indicated by the use of "0" in place of "1" along the x-axis of x-y graph 300C.
In an analogous fashion, FIGs. 3D to 3F show x-y graphs 300D, 300E and 300F with cut-offs 310D, 310D and 310F, respectively, that are set progressively higher. Thus, as shown in FIG. 3F, for example, only four data frames now have assigned priority levels above the cut-off 310F. The remainder of the frames are dropped from cache. This may be a situation where the cache is rather small, or where the desired rate of processing is very high.
In an illustrative embodiment, the cut-off (i.e. one of 310A to 310F) may be set based on at least one of the desired rate of processing, the size of the plurality of data frames, and the amount of space that is available in cache. For example, if the desired rate of processing increases, then the cut-off may need to be set higher to drop additional frames in order to compensate for the increased demand for cache storage. As another example, if most of the required data frames have been fetched into cache, it may only be necessary to set a relatively low cut-off, as shown in FIG. 3B. In this case, only a few data frames need to be dropped from cache. If there is a more significant shortage of space in cache, a higher cut-off may be set (as in FIG. 3C or FIG. 3D for example) so that more of the lower priority data frames may be dropped from cache. Once the cut-off has been set, as the priority level pattern is recurring, it will be appreciated that it is now possible to identify in advance which successive data frames must be fetched into cache. A suitably configured fetch module (e.g. as embodied in data processing system 100 and application software 103) may be used to selectively fetch only those data frames that are above the cut-off.
Preferably, the selective fetching of successive data frames into cache should look forward at least the length of the recurring priority level pattern, or longer, so that any data frames required for processing in the next recurring cycle may be selectively fetched into cache at a sufficient rate to maintain the desired processing rate.
Advantageously, by creating a completely deterministic scheme for dropping data frames, and selectively fetching successive data frames into cache, the data processing overhead required to handle dropping and fetching may be significantly reduced. This is because it is no longer necessary to expend processing resources to decide, at each moment, which data frames should be dropped and which data frames should be selectively fetched into cache. By using a suitable recurring priority level pattern, and by applying a suitable cut-off level, the dropping and fetching scheme may be set deterministically with no further decision making required during the duration of processing a particular set of successive data frames. If some parameters change, another suitable cut-off level may be selected, and the dropping and fetching scheme may again be set.
In the context of digital medical imaging applications, this dropping and fetching scheme may result in reduced cache misses (i.e. a required image frame is missing), such that smoother playback is achieved when rendering successive high-resolution image frames at a desired rate.

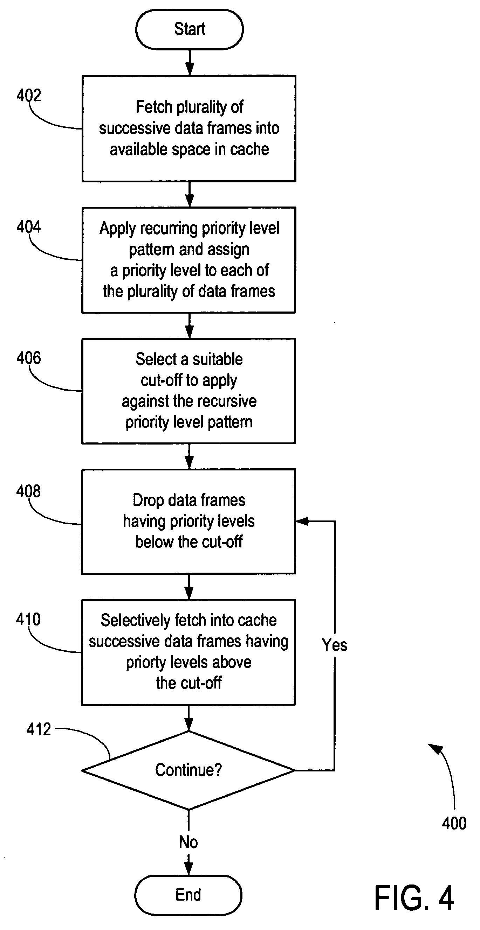

FIG. 4 shows a schematic flow chart of an illustrative method 400 in accordance with an embodiment of the invention. Method 400 generally corresponds to the illustrative embodiment shown and discussed above with reference to FIGS. 3A to 3F. Method 400 begins and proceeds to block 402, where method 400 fetches a plurality of data frames into available space in cache. From block 402, method 400 proceeds to block 404, where a recurring priority level pattern is applied to assign a priority level to each of the data frames. Method 400 then proceeds to block 406, where method 400 selects a suitable priority level cut-off to apply against the recurring priority level pattern.
Referring back to FIG. 4, at block 408, method 400 drops those data frames having priority levels below the cut-off. Method 400 then proceeds to block 410, where method 400 selectively fetches into cache successive data frames having priority levels above the cut-off.
Method 400 then proceeds to decision block 412, where method 400 may either return to block 408 to continue the dropping and selective fetching data frames, or else proceed to End.
While illustrative embodiments of the invention have been described above, it will be appreciated by those skilled in the art that variations and modifications may be made. For example, the recurring priority level pattern has a length of 6 frames, and a range of priority levels between 1 and 6. However, another recurring priority level pattern may be used. For example, the recurring priority level pattern may have a different length (i.e. number of frames), and have a wider or narrower range of priority levels. In the context of processing image frames, while the recurring priority level pattern may have a length of at least two, a more preferred length may be between four and thirty. The recurring priority level pattern may have the alternating "saw-tooth" arrangement shown in the illustration (FIGS. 3A to 3F), or may have another pattern that may result in a desired dropping and fetching scheme. Also, while a specific example has been discussed in relation to digital medical imaging, it will be appreciated that the teachings of the present invention may be applicable to other applications in which a more efficient caching and fetching scheme is desired. Thus, the scope of the invention is defined by the following claims.

## Claims

1. A data processing method of fetching a plurality of data frames for processing in succession at a desired rate, comprising fetching said plurality of data frames into available space in cache (402), and **characterized by**:
- assigning a priority level to each of said plurality of data frames by applying a recurring priority level pattern (404);
- selecting a priority level cut-off for said plurality of data frames (406).
- dropping from said cache any data frames with a priority level below said priority level cut-off (408).
- selectively fetching into said cache any successive data frames with a priority level above said priority level cut-off (410).

2. The data processing method according to claim 1, further comprising selecting said priority level cut-off (406)in dependence upon at least one of said desired rate, the size of said plurality of data frames, and the available space in said cache.

3. The data processing method according to claims 1 to 2, further comprising applying an alternating saw-tooth arrangement utilizing said recurring priority level pattern (300A-300F).

4. The data processing method according to claims 1 to 3, wherein said plurality of data frames comprise digital image frames, and said processing comprises rendering said image frames for display in succession at said desired rate.

5. The data processing method according to claims 1 to 4, wherein said recurring priority level pattern is between four image frames and thirty image frames in length.

6. A data processing system for fetching a plurality of data frames for processing in succession at a desired rate, comprising a cache for fetching said plurality of data frames into available space in cache (402), and **characterized by**:
- an assignment module for assigning a priority level to each of said plurality of data frames by applying a recurring priority level pattern (404);
- a selection module for selecting a priority level cut-off for said plurality of data frames (406).
- a drop module for dropping from said cache any data frames with a priority level below said priority level cut-off (408).
- a fetch module for selectively fetching into said cache any successive data frames with a priority level above said priority level cut-off (410).

7. The data processing system according to claim 6, wherein said selection module is configurable to select said priority level cut-off (406) in dependence upon at least one of said desired rate, the size of said plurality of data frames, and the available space in said cache.

8. The data processing system according to claims 6 to 7, wherein said plurality of data frames comprise digital image frames, and said processing comprises rendering said image frames for display in succession at said desired rate.

9. A computer program comprising computer program code means adapted to perform all the steps of claim 1 when said program is run on a computer.

10. The computer program according to claim 9, also comprising instructions for selecting said priority level cut-off in dependence upon at least one of said desired rate, the size of said plurality of data frames, and the available space in said cache.

## Patentansprüche

1. Ein Datenverarbeitungsverfahren zum Abrufen einer Vielzahl von Datenrahmen zwecks deren Folgeverarbeitung bei einer erwünschten Geschwindigkeit, wobei die Vielzahl von Datenrahmen in einen verfügbaren Platz im Cache-Speicher geladen werden (402) und das Verfahren **dadurch gekennzeichnet ist, dass** :
- jedem der Vielzahl von Datenrahmen durch Anwendung eines wiederkehrenden Prioritätsebenenmusters eine Prioritätsebene zugewiesen wird (404),
- ein Prioritätsebenengrenzwert für die Vielzahl von Datenrahmen ausgewählt wird (406),
- alle Datenrahmen mit einer Prioritätsebene unterhalb des Prioritätsebenengrenzwerts aus dem Cache-Speicher gelöscht werden (408), und
- alle aufeinanderfolgenden Datenrahmen mit einer Prioritätsebene oberhalb des Prioritätsebenengrenzwerts selektiv in den Cache-Speicher geladen werden (410).

2. Datenverarbeitungsverfahren nach Anspruch 1, in dem ferner der Prioritätsebenengrenzwert als Funktion der erwünschten Geschwindigkeit und/oder der Größe der Vielzahl von Datenrahmen und/oder des verfügbaren Platzes im Cache-Speicher ausgewählt wird (406).

3. Datenverarbeitungsverfahren nach Anspruch 1 und 2, in dem ferner unter Verwendung des wiederkehrenden Prioritätsebenenmusters eine alternierende Sägezahnanordnung angewendet wird (300A-300F).

4. Datenverarbeitungsverfahren nach einem der Ansprüche 1 bis 3, **dadurch gekennzeichnet, dass** die Vielzahl von Datenrahmen Digitalbildrahmen umfasst und die Verarbeitung die Wiedergabe der Bildrahmen zwecks deren aufeinanderfolgender Anzeige bei der erwünschten Geschwindigkeit umfasst.

5. Datenverarbeitungsverfahren nach einem der Ansprüche 1 bis 4, **dadurch gekennzeichnet, dass** die Länge des wiederkehrenden Prioritätsebenenmusters zwischen vier Bildrahmen und dreißig Bildrahmen liegt.

6. Ein Datenverarbeitungssystem zum Abrufen einer Vielzahl von Datenrahmen zwecks deren Folgeverarbeitung bei einer erwünschten Geschwindigkeit, wobei das System einen Cache-Speicher, in dem die Vielzahl von Datenrahmen in einen verfügbaren Platz geladen wird (402), umfasst und **gekennzeichnet ist durch** :
- ein Zuweisungsmodul, das jedem der Vielzahl von Datenrahmen durch Anwendung eines wiederkehrenden Prioritätsebenenmusters eine Prioritätsebene zuweist (404),
- ein Auswahlmodul, das einen Prioritätsebenengrenzwert für die Vielzahl von Datenrahmen auswählt (406),
- ein Löschmodul, das alle Datenrahmen mit einer Prioritätsebene unterhalb des Prioritätsebenengrenzwerts aus dem Cache-Speicher löscht (408), und
- ein Abrufmodul, das alle aufeinanderfolgenden Datenrahmen mit einer Prioritätsebene oberhalb des Prioritätsebenengrenzwerts selektiv in den Cache-Speicher lädt (410).

7. Datenverarbeitungssystem nach Anspruch 6, **dadurch gekennzeichnet, dass** das Auswahlmodul so konfiguriert werden kann, dass der Prioritätsebenengrenzwert als Funktion der erwünschten Geschwindigkeit und/oder der Größe der Vielzahl von Datenrahmen und/oder des verfügbaren Platzes im Cache-Speicher ausgewählt wird (406).

8. Datenverarbeitungssystem nach Anspruch 6 und 7, **dadurch gekennzeichnet, dass** die Vielzahl von Datenrahmen Digitalbildrahmen umfasst und die Verarbeitung die Wiedergabe der Bildrahmen zwecks deren aufeinanderfolgender Anzeige bei der erwünschten Geschwindigkeit umfasst.

9. Ein Computerprogramm, das Computerprogrammcodemittel umfasst, die so ausgelegt sind, dass bei Verwendung des Programms auf einem Computer alle Schritte des Anspruchs 1 ausgeführt werden.

10. Computerprogramm nach Anspruch 9, das ferner Anweisungen für die Auswahl des Prioritätsebenengrenzwerts als Funktion der erwünschten Geschwindigkeit und/oder der Größe der Vielzahl von Datenrahmen und/oder des verfügbaren Platzes im Cache-Speicher umfasst.

## Revendications

1. Un procédé de traitement de données comprenant la recherche d'une multitude de trames de données en vue de leur traitement successif à une vitesse souhaitée, ledit procédé consistant à charger la multitude de cadres de données dans un emplacement libre de l'antémémoire (402) et ledit procédé étant **caractérisé en ce que** :
- un niveau de priorité est attribué à chacune de la multitude de trames de données en appliquant une configuration récurrente de niveaux de priorité (404),
- un seuil limite de niveau de priorité est sélectionné pour la multitude de trames de données (406),
- toutes les trames de données ayant un niveau de priorité inférieur au seuil limite de niveau de priorité sont effacées de l'antémémoire (408),
- toutes les trames de données successives ayant un niveau de priorité supérieur au seuil limite de niveau de priorité sont chargées sélectivement dans l'antémémoire (410).

2. Procédé de traitement de données selon la revendication 1, consistant en outre à sélectionner le seuil limite de niveau de priorité (406) en fonction de la vitesse souhaitée et/ou de la taille de la multitude de trames de données et/ou de l'emplacement libre dans l'antémémoire.

3. Procédé de traitement de données selon les revendications 1 et 2, consistant en outre à appliquer une structure en dents de scie utilisant la configuration récurrente de niveaux de priorité (300A-300F).

4. Procédé de traitement de données selon l'une quelconque des revendications 1 à 3, **caractérisé en ce que** la multitude de trames de données comprend des trames d'images numériques et que le traitement comprend le rendu des trames d'image en vue de leur affichage successif à la vitesse souhaitée.

5. Procédé de traitement de données selon l'une quelconque des revendications 1 à 4, **caractérisé en ce que** la longueur de la configuration récurrente de niveaux de priorité est comprise entre quatre trames d'image et trente trames d'image.

6. Un système de traitement de données comprenant la recherche d'une multitude de trames de données en vue de leur traitement successif à une vitesse souhaitée, ledit système comprenant une antémémoire dans laquelle la multitude de cadres de données est chargée dans un emplacement libre (402) et ledit système étant **caractérisé par** :
- un module d'attribution servant à attribuer un niveau de priorité à chacune de la multitude de trames de données en appliquant une configuration récurrente de niveaux de priorité (404),
- un module de sélection servant à sélectionner un seuil limite de niveau de priorité pour la multitude de trames de données (406),
- un module d'effacement servant à effacer de l'antémémoire toutes les trames de données ayant un niveau de priorité inférieur au seuil limite de niveau de priorité (408), et
- un module de recherche servant à charger sélectivement dans l'antémémoire toutes les trames de données successives ayant un niveau de priorité supérieur au seuil limite de niveau de priorité (410).

7. Système de traitement de données selon la revendication 6, **caractérisé en ce que** le module de sélection peut être configuré de façon à ce que le seuil limite de niveau de priorité soit sélectionné (406) en fonction de la vitesse souhaitée et/ou de la taille de la multitude de trames de données et/ou de l'emplacement libre dans l'antémémoire.

8. Système de traitement de données selon les revendications 6 et 7, **caractérisé en ce que** la multitude de trames de données comprend des trames d'images numériques et que le traitement comprend le rendu des trames d'image en vue de leur affichage successif à la vitesse souhaitée.

9. Un programme informatique comprenant des moyens de code de programme informatique configurés de façon à assurer l'exécution de toutes les étapes de la revendication 1 lorsque le programme est appliqué sur un ordinateur.

10. Programme informatique selon la revendication 9 comprenant en outre des instructions permettant de sélectionner le seuil limite de niveau de priorité en fonction de la vitesse souhaitée et/ou de la taille de la multitude de trames de données et/ou de l'emplacement libre dans l'antémémoire.
